# EUROPEAN PATENT APPLICATION

(11) **EP 4 019 200 A1**
(43) Date of publication of application: **29.06.2022**
(21) Application number: 20856131.6
(22) Date of filing: 26.08.2020
(51) Int. Cl.: B25J 9/10, B25J 5/00, B25J 13/08

(54) **PRODUCTION SYSTEM**

(30) Priority: 30.08.2019 JP 2019158059
(71) Applicant: DMG Mori Co., Ltd., Yamatokoriyama-shi, Nara 639-1160 (JP)
(72) Inventor: NAGASUE, Hideki, Yamatokoriyama-shi, Nara 639-1160 (JP); NAKAGAWA, Masaaki, Yamatokoriyama-shi, Nara 639-1160 (JP); OBA, Yuta, Yamatokoriyama-shi, Nara 639-1160 (JP)
(74) Representative: Isarpatent
(86) International application number: PCT/JP2020/032140
(87) International publication number: WO 2021/039829

(57) **Abstract**

A production system includes a machine tool (10), a robot (25) having a camera (31), an automatic guided vehicle (35) having the robot (25) mounted thereon, and a controller (40) controlling the automatic guided vehicle (35) and the robot (25), and has an identification figure arranged in a machining area of the machine tool (10). The controller (40) stores, as a reference image, an image of the identification figure captured by the camera (31) with the robot (25) in an image capturing pose in a teaching operation. When repeatedly operating the automatic guided vehicle (35) and the robot (25), the controller (40) estimates an amount of error between a pose of the robot (25) in the teaching operation and a current pose of the robot (25) based on the reference image and an image of the identification figure captured by the camera (31) with the robot (25) in the image capturing pose, and corrects operating poses of the robot (25) based on the estimated amount of error.

## Description

### Technical Field

0001 The present invention relates to a production system that consists of a machine tool machining a workpiece, a robot performing an operation with respect to the machine tool, an automatic guided vehicle having the robot mounted thereon and moving to an operation position set with respect to the machine tool, and a controller controlling operation of the robot and automatic guided vehicle.

### Background Art

0002 A conventionally known example of the production system as described above is disclosed in Japanese Unexamined Patent Application Publication No. 2017-132002 (Patent Literature 1). This production system is configured such that the automatic guided vehicle having the robot mounted thereon moves to the operation position set with respect to the machine tool and the robot performs operations, such as workpiece attachment and workpiece removal, with respect to the machine tool at the operation position.

0003 Such a production system enables a single robot which is moved by an automatic guided vehicle to perform operations, such as workpiece attachment and workpiece removal, with respect to more than one machine tool. Therefore, as compared with a production system in which a robot is arranged fixedly with respect to a machine tool, the degree of freedom in machine tool layout is increased so that a machine tool layout which provides enhanced production efficiency is possible. Further, since it is possible to cause a single robot to perform operations with respect to many machine tools, equipment costs are reduced as compared with the conventional production system with the robot arranged fixedly.

0004 However, because the automatic guided vehicle is configured to propel itself by means of wheels, the automatic guided vehicle does not always stop at the operation position with high positioning accuracy. Therefore, in order that the robot accurately performs operations with respect to the machine tool, it is necessary to, when the automatic guided vehicle is positioned at the operation position, compare the pose of the robot with a reference pose of the robot that is set in the so-called "teaching" and serves as a reference for control, detect an amount of error between them, and correct an operating pose of the robot based on the detected amount of error.

0005 A conventionally known technique for such robot pose correction is disclosed as a position correction method in Japanese Unexamined Patent Application Publication No. 2016-221622 (Patent Literature 2). Specifically, this position correction method is configured such that a visual target consisting of two calibration markers is arranged on an outer surface of the machine tool, an image of the visual target is captured by a camera arranged on a movable part of the robot, a relative positional relation between the robot and the machine tool is measured based on the captured image and the position and pose of the camera, and an operating pose of the robot is corrected based on the measured positional relation.

### Citation List

### Patent Literature

0006
Patent Literature 1: Japanese Unexamined Patent Application Publication No. 2017-132002
Patent Literature 2: Japanese Unexamined Patent Application Publication No. 201 6-221 622

### Summary of Invention

### Technical Problem

0007 However, the above-described conventional position correction method has the problem that, for example, when a hand or the like of the robot is inserted in the machine tool to cause the hand to attach or remove a workpiece to or from a chuck or the like of the machine tool, the operating pose of the robot for performing the attachment or removal is not accurately corrected.

0008 Specifically, because the automatic guided vehicle is configured to be moved by operation of the wheels that have a relatively high degree of freedom, the automatic guided vehicle has the characteristics that the robot-mounted surface thereof is easily tilted toward the floor and that this tilt of the robot-mounted surface easily varies due to change of the pose of the robot mounted thereon, in other words, due to change of the position of the center of gravity of the robot.

0009 Therefore, when the robot is in a pose having the hand thereof inserted in the machine tool to perform the workpiece attachment or workpiece removal, in other words, when an arm of the robot is overhanging to a great extent from the automatic guided vehicle, the tilt of the robot-mounted surface of the automatic guided vehicle is greater than that when the hand of the robot is positioned outside the machine tool and the arm of the robot is not overhanging from the automatic guided vehicle or is overhanging only to a very slight extent.

0010 Therefore, where, as in the above-described conventional position correction method, a visual target as a calibration marker is arranged on an outer surface of the machine tool and a position correction amount (pose correction amount) for the robot is obtained with the robot positioned outside the machine tool, the pose of the robot for the workpiece attachment or workpiece removal to be performed with the hand of the robot inserted in the machine tool cannot be accurately corrected based on the obtained position correction amount.

0011 Where the pose of the robot for the workpiece attachment or workpiece removal is not accurately corrected, the hand of the robot cannot be accurately positioned with respect to the chuck. For example, in the case where the chuck is such that its clamping part has only a very small movement allowance (stroke), such as in the case of a collet chuck, the chuck fails to reliably clamp the workpiece.

0012 Where the workpiece attachment or workpiece removal is not carried out reliably, availability of the production system is reduced. Such a production system cannot achieve an unmanned production system with high reliability and excellent production efficiency.

0013 The present invention has been achieved in view of the above-described circumstances and an object of the invention is to provide a production system which is configured to cause a robot mounted on an automatic guided vehicle to perform an operation with respect to a machine tool, wherein an operating pose of the robot with respect to the machine tool is corrected with higher accuracy.

### Solution to Problem

0014 To solve the above-described problem, the present invention provides a production system including:
a machine tool performing predetermined machining on a workpiece;
a robot having a camera for image capturing and configured to perform an operation with respect to the machine tool;
an automatic guided vehicle having the robot mounted thereon, and configured to move to an operation position set with respect to the machine tool; and
a controller configured to, in accordance with an operation program containing a preset operation command, move the automatic guided vehicle to the operation position, then bring the robot from an operation starting pose into an image capturing pose allowing an image of an identification figure for pose correction provided on the machine tool to be captured by the camera, and then bring the robot into operating poses in sequence,
the operation starting pose, the image capturing pose, and the operating poses being set in advance by performing a teaching operation to the robot,
the identification figure being arranged in a machining area of the machine tool,
the controller previously storing, as a reference image, an image of the identification figure captured by the camera with the robot in the image capturing pose in the teaching operation, and
the controller being configured to, when repeatedly operating the automatic guided vehicle and the robot in accordance with the operation program, estimate an amount of error between a pose of the robot in the teaching operation and a current pose of the robot based on the reference image and an image of the identification figure captured by the camera with the robot brought into the image capturing pose from the operation starting pose, and correct the operating poses based on the estimated amount of error.

0015 In this production system, the automatic guided vehicle and the robot are controlled by the controller. The automatic guided vehicle is moved to the operation position set with respect to the machine tool. The robot is brought into the operating poses in sequence in accordance with the operation program containing the preset operation command under control by the controller, thereby performing the operation, e.g., workpiece attachment or workpiece removal, with respect to the machine tool.

0016 Operation of the robot is controlled in accordance with the operation program. After the automatic guided vehicle is moved to the operation position, the robot starts to operate in the operation starting pose. Subsequently, the robot is brought into the image capturing pose allowing an image of the identification figure for pose correction provided on the machine tool to be captured by the camera, and then brought into the operating poses in sequence. The operation starting pose, the image capturing pose, the operating poses are set in advance by performing a teaching operation to the robot.

0017 An image of the identification figure captured by the camera with the robot in the image capturing pose in the teaching operation is previously stored as a reference image into the controller. Thereafter, when repeatedly operating the automatic guide vehicle and the robot in accordance with the operation program, the controller estimates an amount of error between a pose of the robot in the teaching operation and a current pose of the robot based on the reference image and an image of the identification figure captured by the camera with the robot brought into the image capturing pose from the operation stating pose, and corrects the operating poses based on the estimated amount of error.

0018 As described above, this production system is configured to correct the operating poses of the robot using the identification figure that is arranged in the machining area of the machine tool where the robot actually performs the operation; therefore, the operating poses are accurately corrected. This enables the robot to accurately perform even an operation which requires high operating accuracy.

0019 Since the robot accurately performs the operation, the production system operates with high availability without unnecessary interruption. Consequently, the production system achieves an unmanned production system with high reliability and high production efficiency.

0020 Note that the production system may be configured such that the identification figure is displayed on a structure provided to be arrangeable in the machining area of the machine tool or is projected on the structure by means of a projector. Further, the display of the identification figure on the structure may be realized by drawing the identification figure directly on the structure or may be realized by adhering a sheet with the identification figure drawn thereon to the structure.

0021 Further, the above-mentioned structure may be a tool presetter provided to be movable into and out of the machining area of the machine tool or may be a holder provided to be attachable to and detachable from a tool spindle of the machine tool.

0022 Such a tool persetter and such a holder can be arranged outside the machining area while machining is performed by the machine tool; therefore, they can be prevented from being soiled by chips or the like. Accordingly, in the case where the identification figure is displayed, the identification figure can be prevented from being soiled, while in the case where the identification figure is projected, the identification figure can be prevented from being distorted. Consequently, the correction is carried out accurately.

0023 Further, the production system may be configured such that the identification figure is displayed on a display provided to be arrangeable in the machining area of the machine tool. This display may be attached to the above-mentioned tool presetter or holder.

0024 Further, in the production system, the identification figure may have a matrix structure having a plurality of pixels arranged two-dimensionally.

### Advantageous Effects of Invention

0025 As described above, the production system according to the present invention is configured to correct the operating poses of the robot using the identification figure that is arranged in the machining area of the machine tool where the robot actually performs the operation; therefore, the operating poses are accurately corrected. This enables the robot to accurately perform even an operation which requires high operating accuracy.

0026 Since the robot accurately performs the operation, the production system operates with high availability without unnecessary interruption. Consequently, the production system achieves an unmanned production system with high reliability and high production efficiency.

### Brief Description of Drawings

0027
FIG. 1 is a plan view schematically illustrating a configuration of a production system according to a first embodiment of the present invention;
FIG. 2 is a block diagram illustrating a configuration of the production system according to the first embodiment;

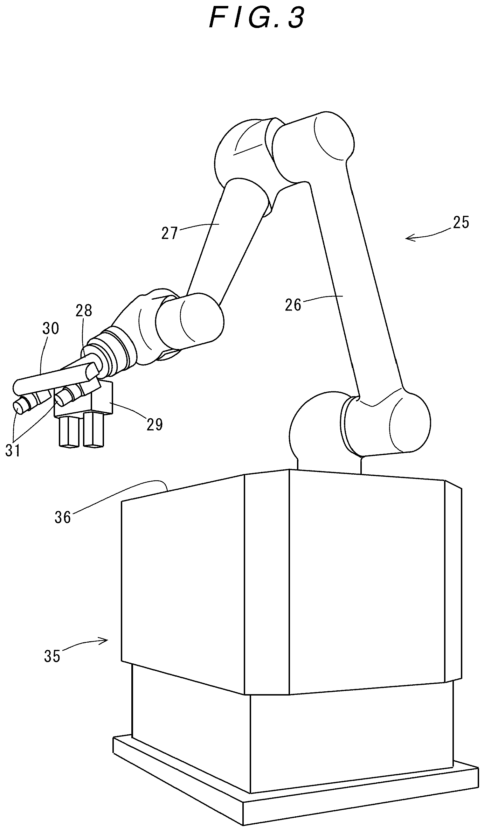

FIG. 3 is a perspective view of an automatic guided vehicle and a robot in the first embodiment;
FIG. 4 is an illustration for explaining operation poses of the robot in the first embodiment;
FIG. 5 is an illustration for explaining the operation poses of the robot in the first embodiment;
FIG. 6 shows (a) an illustration showing an identification figure in the first embodiment and (b) an illustration showing an example of an image captured by a camera with the robot in an image capturing pose;
FIG. 7 is an illustration for explaining operation poses of the robot in a second embodiment of the present invention;
FIG. 8 is an illustration for explaining the operation poses of the robot in the second embodiment;
FIG. 9 is an illustration for explaining operation poses of the robot in a third embodiment of the present invention;
FIG. 10 is an illustration for explaining the operation poses of the robot in the third embodiment;
FIG. 11 is an illustration for explaining operation poses of the robot in a fourth embodiment of the present invention; and
FIG. 12 is an illustration for explaining the operation poses of the robot in the fourth embodiment.

### Description of Embodiments

0028 Hereinafter, specific embodiments of the present invention will be described with reference to the drawings.

0029

### (First Embodiment)

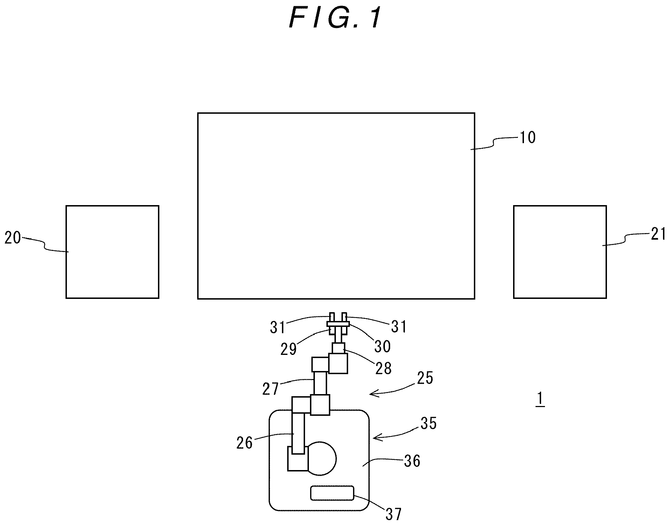

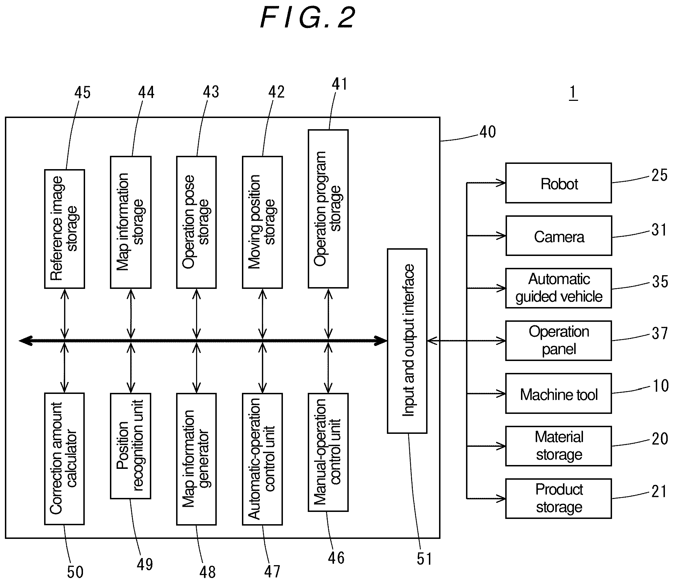

Firstly, a first embodiment of the present invention is described. As illustrated in FIGS. 1 and 2, a production system 1 according to this embodiment includes a machine tool 10, a material storage 20 and a product storage 21 as peripheral devices, an automatic guided vehicle 35, a robot 25 mounted on the automatic guided vehicle 35, cameras 31 attached to the robot 25, and a controller 40 controlling the robot 25 and the automatic guided vehicle 35.

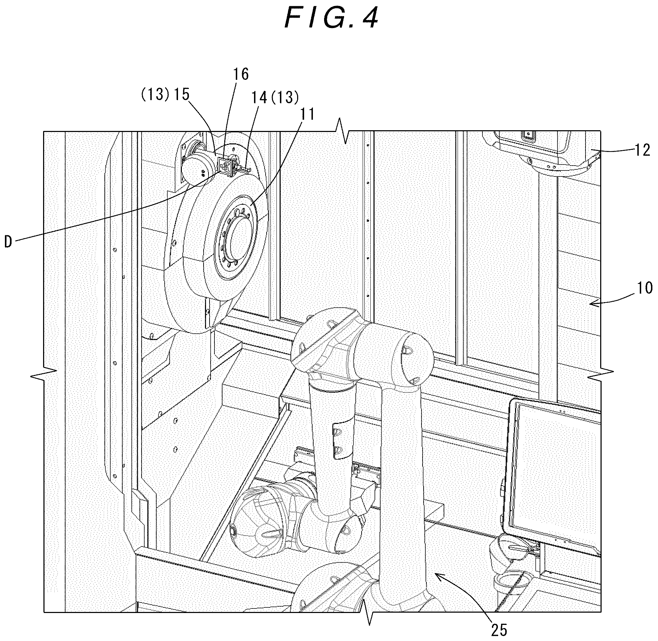

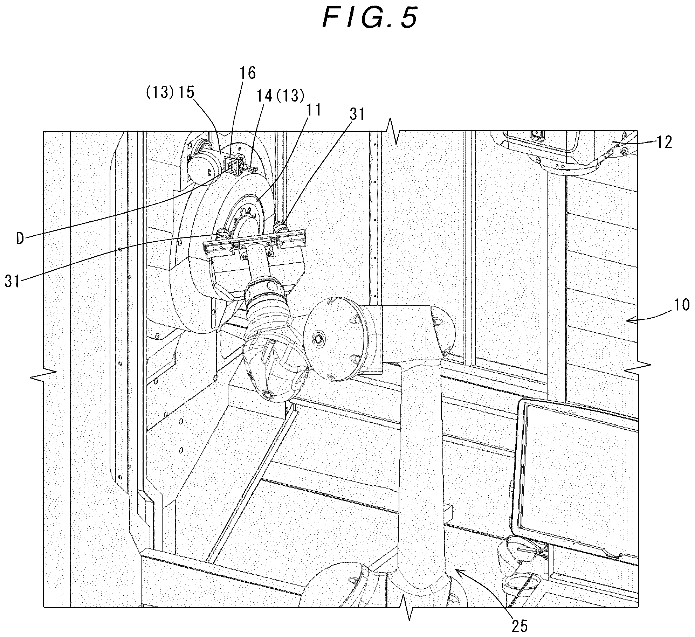

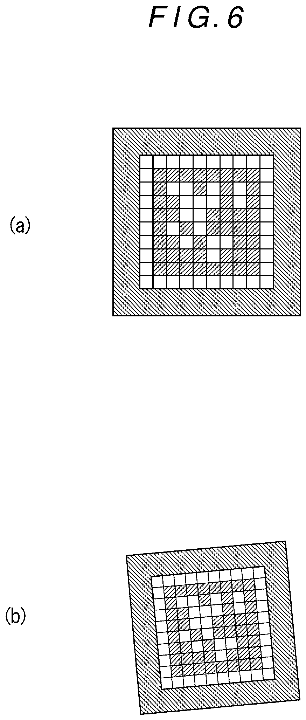

0030 As illustrated in FIGS. 4 and 5, the machine tool 10 is of the type commonly known as an NC (numerically-controlled) combined machine tool that has a workpiece spindle 11, to which a chuck for clamping a workpiece is attached, and a tool spindle 12 for holding a tool, and the machine tool 10 is therefore capable of both turning and milling. The machine tool 10 has a tool presetter 13 arranged in the vicinity of the workpiece spindle 11. The tool presetter 13 has a contactor 14 and a support bar 15 supporting the contactor 14. The support bar 15 is movable into and out of a machining area along an axis of the workpiece spindle 11 and has a display board 16 provided on a side surface thereof located on the operating side at the machining area side end thereof. On the display board 16, a sheet with an identification figure as illustrated in FIG. 6(a) drawn thereon is adhered. Note that the identification figure in this example has a matrix structure having a plurality of square pixels arranged two-dimensionally, each pixel being displayed in white or black. In FIG. 6, the pixels displayed in black are hatched. Further, FIGS. 4 and 5 each show a state where the support bar 15 and the contactor 14 have moved into the machining area. In FIGS. 4 and 5, illustration of the chuck is omitted for a certain reason.

0031 The material storage 20 is disposed on the left of the machine tool 10 in FIG. 1. The material storage 20 stores therein materials (unmachined workpieces) to be machined in the machine tool 10. The product storage 21 is disposed on the right of the machine tool 10 in FIG. 1. The product storage 21 stores therein products or semi-finished products (machined workpieces) machined in the machine tool 10.

0032 As illustrated in FIG. 1, the automatic guided vehicle 35 has a mount surface 36 as its top surface, on which the robot 25 is mounted. Further, the automatic guided vehicle 35 has an operation panel 37 attached thereto which an operator can carry around. The operation panel 37 has an input and output unit for input and output of data, an operation unit for manual operation of the automatic guided vehicle 35 and the robot 25, and a display capable of displaying a picture thereon.

0033 Further, the automatic guided vehicle 35 has a sensor (for example, a distance measurement sensor using a laser beam) which enables recognition of the position of the automatic guided vehicle 35 in a plant, and the automatic guided vehicle 35 is configured to travel tracklessly in the plant, including the area where the machine tool 10, the material storage 20, and the product storage 21 are disposed, under control by the controller 40. The automatic guided vehicle 35 in this embodiment moves to operation positions respectively set with respect to the machine tool 10, the material storage 20, and the product storage 21.

0034 The robot 25 is an articulated robot having three arms, namely, a first arm 26, a second arm 27, and a third arm 28. The third arm 28 has a hand 29 as an end effector attached to a distal end thereof, and also has two cameras 31 attached to the distal end thereof through a support bar 30.

0035 As illustrated in FIG. 2, the controller 40 consists of an operation program storage 41, a moving position storage 42, an operation pose storage 43, a map information storage 44, a reference image storage 45, a manual-operation control unit 46, an automatic-operation control unit 47, a map information generator 48, a position recognition unit 49, a correction amount calculator 50, and an input and output interface 51. The controller 40 is connected to the machine tool 10, the material storage 20, the product storage 21, the robot 25, the cameras 31, the automatic guided vehicle 35, and the operation panel 37 through the input and output interface 51.

0036 Note that the controller 40 is composed of a computer including a CPU, a RAM, and a ROM. The manual-operation control unit 46, the automatic-operation control unit 47, the map information generator 48, the position recognition unit 49, the correction amount calculator 50, and the input and output interface 51 are functionally implemented by a computer program to carry out the processes described later. The operation program storage 41, the moving position storage 42, the operation pose storage 43, the map information storage 44, and the reference image storage 45 are composed of an appropriate storage medium, such as a RAM.

0037 The manual-operation control unit 46 is a functional unit that operates the automatic guided vehicle 35, the robot 25, and the cameras 31 in accordance with operation signals input through the operation panel 37 by an operator. That is to say, an operator can manually operate the automatic guided vehicle 35, the robot 25, and the cameras 31 through the operation panel 37, which is controlled by the manual-operation control unit 46.

0038 The operation program storage 41 is a functional unit that stores therein an automatic operation program for causing the automatic guided vehicle 35 and the robot 25 to operate automatically during production, and a map generation program for causing the automatic guided vehicle 35 to operate during generation of map information of the plant, which is described later. The automatic operation program and the map generation program are stored into the operation program storage 41, for example, by being input through the input and output unit of the operation panel 37.

0039 The automatic operation program contains command codes regarding a moving position as a target position to which the automatic guided vehicle 35 is moved, a moving speed of the automatic guided vehicle 35, and an orientation of the automatic guided vehicle 35. The automatic operation program further contains command codes regarding operations to be carried out in sequence by the robot 25 and command codes regarding operation of the cameras 31. The map generation program contains command codes for causing the automatic guided vehicle 35 to travel tracklessly all over the plant to cause the map information generator 48 to generate map information.

0040 The map information storage 44 is a functional unit that stores therein map information including information on arrangement of machines, devices, instruments, etc. (hereinafter, collectively referred to as "devices") arranged in the plant where the automatic guided vehicle 35 travels. The map information is generated by the map information generator 48.

0041 The map information generator 48 obtains spatial information of the plant from distance data detected by the sensor when the automatic guided vehicle 35 travels in accordance with the map generation program stored in the operation program storage 41 under control by the automatic-operation control unit 47, which is described in detail later, of the controller 40. The map information generator 48 also recognizes planar shapes of the devices arranged in the plant, and, for example, based on previously registered planar shapes of the devices, recognizes the positions, planar shapes, etc. of particular devices (in this embodiment, the machine tool 10, the material storage 20, and the product storage 21) arranged in the plant (arrangement information). The map information generator 48 stores the obtained spatial information and arrangement information as map information of the plant into the map information storage 44.

0042 The position recognition unit 49 is a functional unit that recognizes the position of the automatic guided vehicle 35 in the plant based on distance data detected by the sensor and the map information of the plant stored in the map information storage 44. The position of the automatic guided vehicle 35 recognized by the position recognition unit 49 is used in control of operation of the automatic guided vehicle 35 by the automatic-operation control unit 47.

0043 The moving position storage 42 is a functional unit that stores therein specific moving positions. The moving positions are specific target positions to which the automatic guided vehicle 35 is moved, and correspond to the above-mentioned command codes contained in the operation program. The moving positions include the above-mentioned operation positions set with respect to the machine tool 10, the material storage 20, and the product storage 21. Note that the moving positions are set, for example, as follows: the automatic guided vehicle 35 is manually operated through the operation panel 37 such that it is moved to each targeted position under control by the manual-operation control unit 46, and position data recognized by the position recognition unit 49 at each targeted position is stored into the moving position storage 42. This operation is generally called "teaching operation".

0044 The operation pose storage 43 is a functional unit that stores therein data regarding poses (operation poses) of the robot 25, into which the robot 25 is brought in sequence when it is operated in a predetermined sequence. The operation poses correspond to the command codes contained in the operation program. This operation pose data is composed of rotational angle data of joints (motors) of the robot 25 in each targeted pose. This rotational angle data is obtained by, in the teaching operation using the operation panel 37, manually operating the robot 25 such that the robot 25 is brought into each targeted pose under control by the manual-operation control unit 46. The obtained rotational angle data is stored as operation pose data into the operation pose storage 43.

0045 Specific operation poses of the robot 25 are set with respect to each of the material storage 20, machine tool 10, and product storage 21. For example, a set of extraction poses is set with respect to the material storage 20, the set of extraction poses consisting of an operation starting pose (extraction starting pose) for starting an operation with respect to the material storage 20, operating poses (extracting poses) for causing the hand 29 to grip an unmachined workpiece stored in the material storage 20 and extract the unmachined workpiece from the material storage 20, and a pose for finishing the extraction (extraction finishing pose; in this embodiment, this pose is identical to the extraction starting pose).

0046 A set of workpiece-removal poses for removing a machined workpiece from the machine tool 10 and a set of workpiece-attachment poses for attaching an unmachined workpiece to the machine tool 10 are set with respect to the machine tool 10.

0047 Specifically, the set of workpiece-removal poses consists of, for example, an operation starting pose preceding entrance into the machine tool 10 (see FIG. 4), a pose for causing the cameras 31 to capture images of the identification figure provided on the support bar 15 (image capturing pose; see FIG. 5), a pose for positioning the hand 29 opposite a machined workpiece clamped by the chuck of the machine tool 10 (removal preparing pose), a pose for moving the hand 29 toward the chuck and causing the hand 29 to grip the machined workpiece clamped by the chuck (gripping pose), a pose for moving the hand 29 away from the chuck to pull the machined workpiece from the chuck (pulling pose), and a pose for moving out of the machine tool 10 (operation finishing pose).

0048 The set of workpiece-attachment poses consists of, for example, an operation starting pose preceding insertion into the machine tool 10 (see FIG. 4), a pose for causing the cameras 31 to capture images of the identification figure provided on the support bar 15 (image capturing pose; see FIG. 5), a pose for positioning a unmachined workpiece gripped by the hand 29 opposite the chuck of the machine tool 10 (attachment preparing pose), a pose for moving the hand 29 toward the chuck to allow the chuck to clamp the unmachined workpiece (attaching pose), a pose for moving the hand 29 away from the chuck (moving-away pose), and a pose for moving out of the machine tool 10 (operation finishing pose).

0049 A set of storage poses is set with respect to the product storage 21, the set of storage poses consisting of an operation starting pose for starting an operation with respect to the product storage 21 (storage starting pose), operating poses for storing a machined workpiece gripped by the hand 29 into the product storage 21 (storing poses), and a pose for finishing the storage (storage finishing pose; in this embodiment, this pose is identical to the storage starting pose).

0050 The automatic-operation control unit 47 is a functional unit that operates the automatic guided vehicle 35, the robot 25, and the cameras 31 in accordance with the automatic operation program or map generation program stored in the operation program storage 41. In this process, the data stored in the moving position storage 42 and the operation pose storage 43 are used as necessary.

0051 The reference image storage 45 is a functional unit that stores therein, as reference images, images of the identification figure provided on the support bar 15 of the tool presetter 13 captured by the two cameras 31 when the automatic guided vehicle 35 is at the operation position set with respect to the machine tool 10 and the robot 25 is in the image capturing pose in the teaching operation.

0052 Once images of the identification figure are captured by the two cameras 31 with the robot 25 in the image capturing pose when the robot 25 operates automatically in accordance with the automatic operation program stored in the operation program storage 41 under control by the automatic-operation control unit 47, the correction amount calculator 50 estimates an amount of error between the image capturing pose in this automatic operation and the image capturing pose in the teaching operation based on the images of the identification figure captured in this automatic operation and the reference images stored in the reference image storage 45, and calculates a correction amount for the set of workpiece-removal poses and the set of workpiece-attachment poses of the robot 25 based on the estimated amount of error. An example of the images of the identification figure captured in the automatic operation is shown in FIG. 6(b).

0053 The cameras 31 are of the type called "stereo camera"; therefore, it is possible to calculate a relative positional relation between the cameras 31 and the identification figure and angles of rotation, e.g., angles of rotation around three orthogonal axes, of the cameras 31 with respect to the identification figure based on images captured by the cameras 31. Accordingly, it is possible to estimate an amount of error between the image capturing pose in the teaching operation and the image capturing pose in the automatic operation based on the positional relation and angles of rotation calculated based on the reference images and the positional relation and angles of rotation calculated based on images captured in the automatic operation.

0054 In the production system 1 according to this embodiment having the above-described configuration, unmanned and automated production is performed in the following manner.

0055 That is to say, the automatic operation program stored in the operation program storage 41 is executed under control by the automatic-operation control unit 47 of the controller 40, so that, for example, the automatic guided vehicle 35 and the robot 25 operate in the following manner in accordance with the automatic operation program.

0056 First, the automatic guided vehicle 35 moves to the operation position set with respect to the machine tool 10, and the robot 25 assumes the operation starting pose for the workpiece removal. At this time, the machine tool 10 has finished a predetermined machining operation, and a door cover thereof has been opened so that the robot 25 can enter the machining area. Further, the support bar 15 of the tool presetter 13 has been moved into the machining area upon receipt of a command from the automatic-operation control unit 47.

0057 Subsequently, the robot 25 shifts to the image capturing pose to cause the camaras 31 to capture images of the identification figure provided on the support bar 15. Once the images of the identification figure are captured by the cameras 31, the correction amount calculator 50 estimates an amount of error between the current image capturing pose of the robot 25 and the image capturing pose of the robot 25 in the teaching operation based on the captured images of the identification figure and the reference images stored in the reference image storage 45, and calculates a correction amount for the rest of the set of workpiece-removal poses of the robot 25 based on the estimated amount of error.

0058 Based on the correction amount calculated by the correction amount calculator 50, the automatic-operation control unit 47 controls the rest of the set of workpiece-removal poses, namely, the removal preparing pose, the gripping pose, the pulling pose, and the operation finishing pose, so that a machined workpiece clamped by the chuck of the machine tool 10 is gripped by the hand 29 and removed from the machine tool 10. Note that, after bringing the robot 25 into the gripping pose, the automatic-operation control unit 47 transmits a chuck open command to the machine tool 10 to open the chuck.

0059 Subsequently, the automatic-operation control unit 47 moves the automatic guided vehicle 35 to the operation position set with respect to the product storage 21 and brings the robot 25 in sequence into the storage starting pose for starting storage with respect to the product storage 21, the storing poses for storing the machined workpiece gripped by the hand 29 into the product storage 21, and the storage finishing pose for finishing the storage. Thereby, the machined workpiece gripped by the hand 29 is stored into the product storage 21.

0060 Subsequently, the automatic-operation control unit 47 moves the automatic guided vehicle 35 to the operation position set with respect to the material storage 20 and brings the robot 25 in sequence into the extraction starting pose for starting extraction with respect to the material storage 20, the extracting poses for causing the hand 29 to grip an unmachined workpiece stored in the material storage 20 and extract the unmachined workpiece from the material storage 20, and the extraction finishing pose for finishing the extraction. Thereby, an unmachined workpiece is gripped by the hand 29.

0061 Subsequently, the automatic-operation control unit 47 moves the automatic guided vehicle 35 to the operation position set with respect to the machine tool 10 again, and brings the robot 25 into the operation starting pose for the workpiece attachment. Subsequently, the automatic-operation control unit 47 brings the robot 25 into the image capturing pose to cause the cameras 31 to capture images of the identification figure provided on the support bar 15. Once the images of the identification figure are captured by the cameras 31, the correction amount calculator 50 estimates an amount of error between the current image capturing pose of the robot 25 and the image capturing pose of the robot 25 in the teaching operation based on the captured images of the identification figure and the reference images stored in the reference image storage 45, and calculates a correction amount for the rest of the set of workpiece-attachment poses of the robot 25 based on the estimated amount of error.

0062 Based on the correction amount calculated by the correction amount calculator 50, the automatic-operation control unit 47 controls the rest of the set of workpiece-attachment poses, namely, the attachment preparing pose, the attaching pose, the moving-away pose, and the operation finishing pose, of the robot 25, thereby causing the robot 25 to attach the unmachined workpiece gripped by the hand 29 to the chuck of the machine tool 10 and then move out of the machine tool 10. Thereafter, the automatic-operation control unit 47 transmits a machining start command to the machine tool 10 to cause the machine tool 10 to perform a machining operation. Note that, after bringing the robot 25 into the attaching pose, the automatic-operation control unit 47 transmits a chuck close command to the machine tool 10 to close the chuck, so that the unmachined workpiece is clamped by the chuck.

0063 In the production system 1 according to this embodiment, unmanned and automated production is continuously performed by repeating the above-described series of processes.

0064 As described above, the production system 1 according to this embodiment is configured to correct the operating poses of the robot 25 using the identification figure that is arranged in the machining area of the machining tool 10 where the robot 25 actually performs the operations; therefore, the operating poses are accurately corrected. This enables the robot 25 to accurately perform even an operation which requires high operating accuracy.

0065 Since the robot 25 accurately performs the operations, the production system 1 operates with high availability without unnecessary interruption. Consequently, the production system 1 achieves an unmanned production system with high reliability and high production efficiency.

0066 Further, the identification figure in this embodiment is provided on the support bar 15 of the tool presetter 13 that is stored outside the machining area while machining is performed by the machine tool 10; therefore, the identification figure is prevented from being soiled by chips or the like produced during machining. Consequently, the correction is carried out accurately.

0067 Note that the identification figure in this example is provided by adhering a sheet with the identification figure drawn thereon to the display board 16 provided on the support bar 15; however, the present invention is not limited thereto and the identification figure may be drawn directly on the display board 16.

0068

### (Second Embodiment)

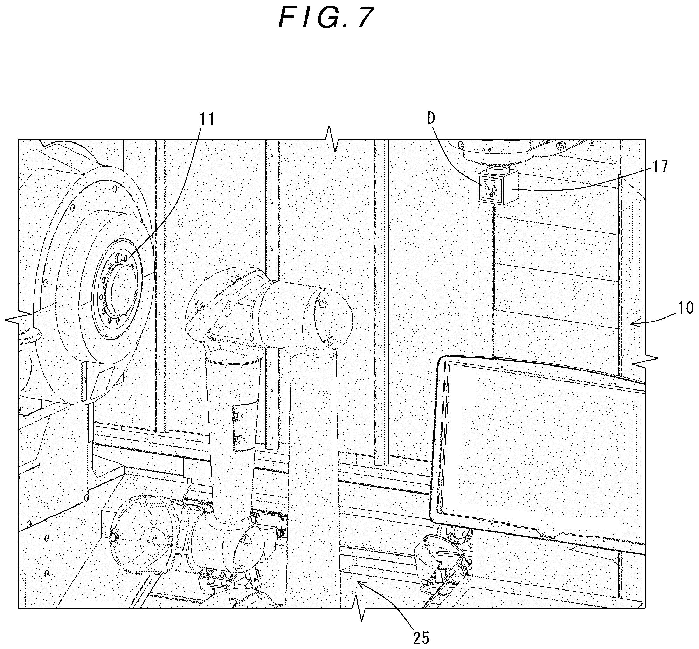

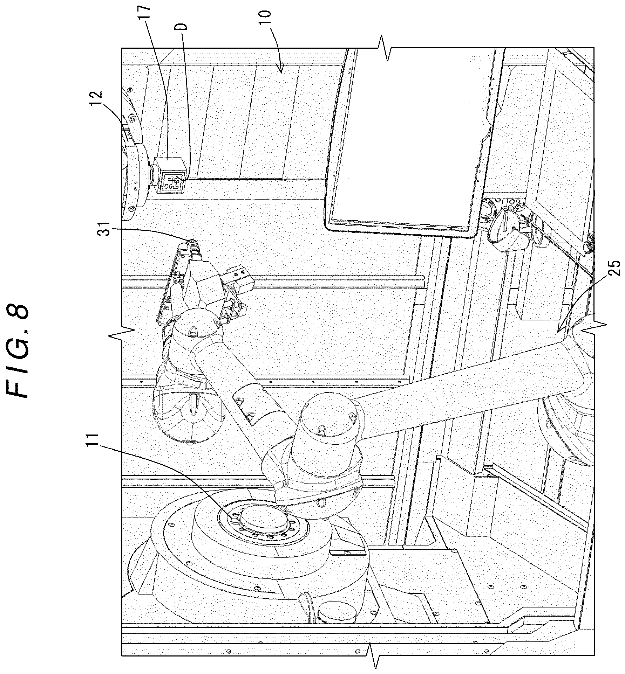

Next, a second embodiment of the present invention is described. In this second embodiment, as shown in FIGS. 7 and 8, the identification figure is provided on a holder 17 that is attachable to and detachable from the tool spindle 12 of the machine tool 10. Just in this respect, the second embodiment is different in configuration from the first embodiment in which the identification figure is provided on the support bar 15 of the tool presetter 13.

0069 Similarly to the tool presetter 13, the holder 17 can be stored outside the machining area while machining is performed by the machine tool 10. Therefore, the identification figure can be prevented from being soiled by chips or the like produced during machining; consequently, the correction is carried out accurately.

0070 As for the manner of providing the identification figure on the holder 17, the identification figure may be provided by adhering a sheet with the identification figure drawn thereon to the holder 17 or may be provided by drawing the identification figure directly on the holder 17.

0071

### (Third Embodiment)

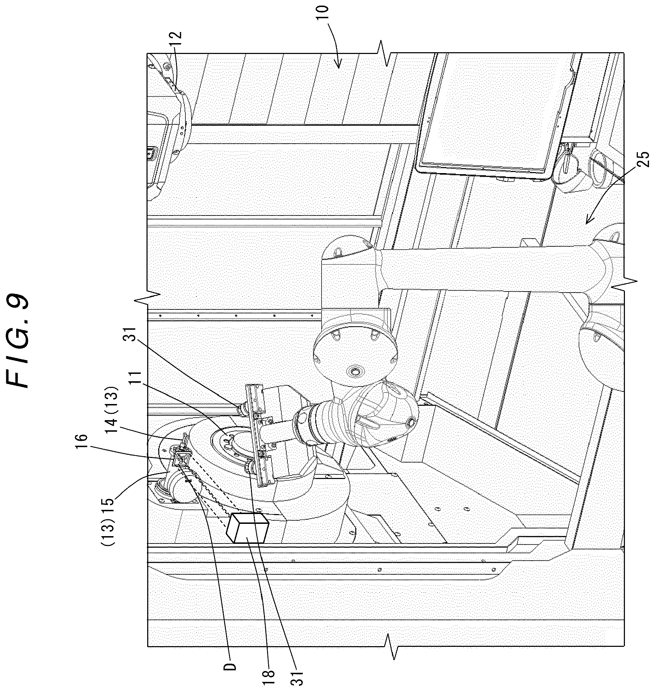

Next, a third embodiment of the present invention is described. In this third embodiment, as shown in FIG. 9, the identification figure is projected on the display board 16 provided on the support bar 15 of the tool presetter 13 of the machine tool 10, by means of a projector 18. Just in this respect, the third embodiment is different in configuration from the first embodiment in which the identification figure is placed on the tool presetter 13. This configuration also provides the same effect as the first embodiment.

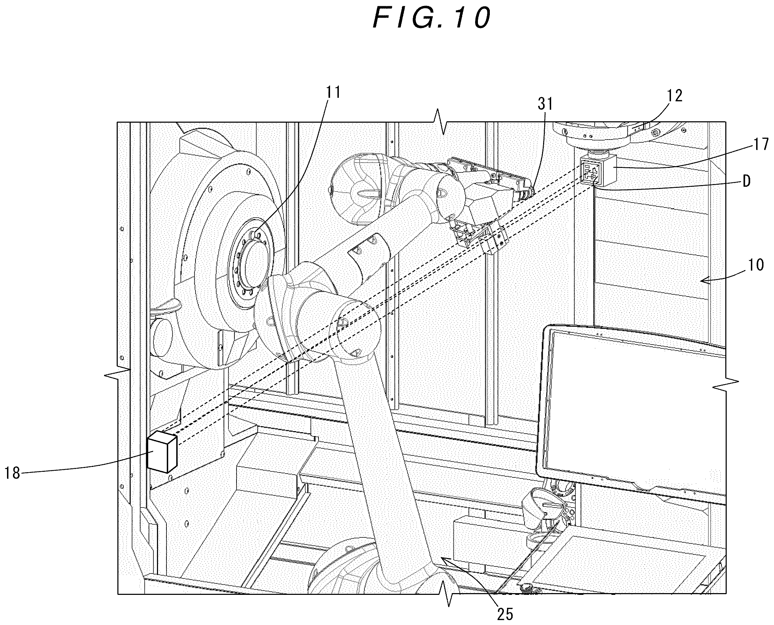

0072 Alternatively, as a variation of this third embodiment, as shown in FIG. 10, the identification figure may be projected on the holder 17 of the machine tool 10 by means of the projector 18. This configuration also provides the same effect as the first embodiment.

0073

### (Fourth Embodiment)

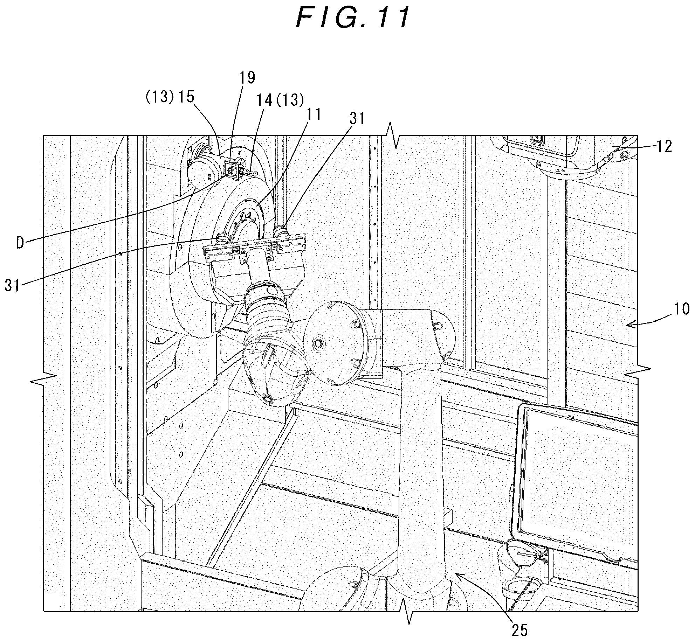

Next, a fourth embodiment of the present invention is described. In this fourth embodiment, as shown in FIG. 11, a display 19 is provided on the support bar 15 of the tool presetter 13 of the machine tool 10 to display the identification figure on the display 19. Just in this respect, the fourth embodiment is different in configuration from the first embodiment. This configuration also provides the same effect as the first embodiment.

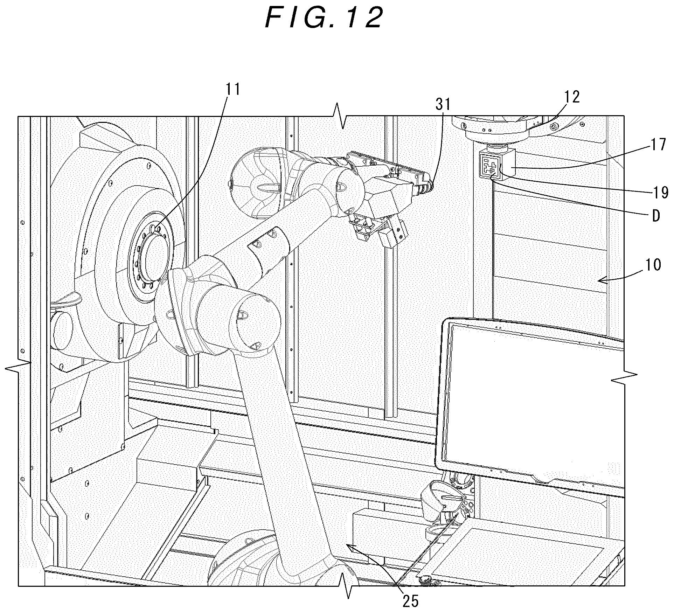

0074 Alternatively, as a variation of this fourth embodiment, as shown in FIG. 12, the display 19 may be provided on the holder 17 of the machine tool 10 to display the identification figure on the display 19. This configuration also provides the same effect as the first embodiment.

0075 Hereinbefore, the first through fourth embodiments of the present invention have been described. However, it should be understood that the present invention is not limited to these embodiments and can be implemented in other manners.

0076 For example, in the above-described embodiments, the identification figure has a matrix structure having a plurality of pixels arranged two-dimensionally. However, the identification figure is not limited to such a figure and may be any other type of figure which is such that a captured image thereof is usable for calculation of a correction amount for poses of the robot 25. Further, in the above-described embodiments, two cameras 31 are provided. However, the present invention is not limited thereto and the production system may include only one camera 31 if it is possible to calculate a correction amount for poses of the robot 25 based on an image captured by the camera 31. Further, in the above-described embodiments, the object on which the identification figure is placed, projected or displayed is a holder or a tool presetter. However, the present invention is not limited thereto and the object may be any other object which is arranged in the machining area, such as a tailstock, a bed, or a table.

0077 As already mentioned above, the foregoing description of the embodiments is not limitative but illustrative in all aspects. One skilled in the art would be able to make variations and modifications as appropriate. The scope of the invention is not defined by the above-described embodiments, but is defined by the appended claims. Further, the scope of the invention encompasses all modifications made from the embodiments within the scope equivalent to the scope of the claims. Reference Signs List

0078
- 1: Production system
- 10: Machine tool
- 11: Workpiece spindle
- 12: Tool spindle
- 13: Tool presetter
- 14: Contactor
- 15: Support bar
- 16: Display board
- 20: Material storage
- 21: Product storage
- 25: Robot
- 29: Hand
- 31: Camera
- 35: Automatic guided vehicle
- 37: Operation panel
- 40: Controller
- 41: Operation program storage
- 42: Moving position storage
- 43: Operation pose storage
- 44: Map information storage
- 45: Reference image storage
- 46: Manual-operation control unit
- 47: Automatic-operation control unit
- 48: Map information generator
- 49: Position recognition unit
- 50: Correction amount calculator
- 51: Input and output interface

## Claims

1. A production system comprising:
a machine tool performing predetermined machining on a workpiece;
a robot having a camera for image capturing and configured to perform an operation with respect to the machine tool;
an automatic guided vehicle having the robot mounted thereon, and configured to move to an operation position set with respect to the machine tool; and
a controller configured to, in accordance with an operation program containing a preset operation command, move the automatic guided vehicle to the operation position, then bring the robot from an operation starting pose into an image capturing pose allowing an image of an identification figure for pose correction provided on the machine tool to be captured by the camera, and then bring the robot into operating poses in sequence,
the operation starting pose, the image capturing pose, and the operating poses being set in advance by performing a teaching operation to the robot,
**characterized in that**:
the identification figure is arranged in a machining area of the machine tool;
the controller previously stores, as a reference image, an image of the identification figure captured by the camera with the robot in the image capturing pose in the teaching operation; and
the controller is configured to, when repeatedly operating the automatic guided vehicle and the robot in accordance with the operation program, estimate an amount of error between a pose of the robot in the teaching operation and a current pose of the robot based on the reference image and an image of the identification figure captured by the camera with the robot brought into the image capturing pose from the operation starting pose, and correct the operating poses based on the estimated amount of error.

2. The production system of claim 1, **characterized in that** the identification figure is displayed on a structure provided to be arrangeable in the machining area of the machine tool or is projected on the structure by means of a projector.

3. The production system of claim 2, **characterized in that** the machine tool includes a tool presetter provided to be movable into and out of the machining area, and the structure is the tool presetter.

4. The production system of claim 2, **characterized in that** the machine tool includes a tool spindle configured to hold a tool, and the structure is a holder provided to be attachable to and detachable from the tool spindle.

5. The production system of claim 1, **characterized in that** the identification figure is displayed on a display provided to be arrangeable in the machining area of the machine tool.

6. The production system of claim 5, **characterized in that** the machine tool includes a tool presetter provided to be movable into and out of the machining area, and the display is attached to the tool presetter.

7. The production system of claim 5, **characterized in that** the machine tool includes a tool spindle configured to hold a tool, and the display is attached to a holder provided to be attachable to and detachable from the tool spindle.

8. The production system of any one of claims 1 to 7, wherein the identification figure has a matrix structure having a plurality of pixels arranged two-dimensionally.
